# EUROPEAN PATENT APPLICATION

(11) **EP 4 738 804 A1**
(43) Date of publication of application: **06.05.2026**
(21) Application number: 23951844.2
(22) Date of filing: 14.09.2023
(51) Int. Cl.: H04M 1/72427

(54) **WALLPAPER DISPLAY METHOD AND ELECTRONIC DEVICE**

(71) Applicant: Honor Device Co., Ltd., Shenzhen, Guangdong 518040 (CN)
(72) Inventor: JIANG, Fan, Shenzhen, Guangdong 518040 (CN)
(74) Representative: Gill Jennings & Every LLP
(86) International application number: PCT/CN2023/118833
(87) International publication number: WO 2025/054906

(57) **Abstract**

This application discloses a wallpaper display method and an electronic device, which are used to avoid a flickering black screen caused by a dynamic wallpaper APP playing an animation effect video in a multi-screen coordination scenario. The wallpaper display method includes: establishing, by a first electronic device, a multi-screen coordination connection to a second electronic device at a first time point, where a folding angle of the first electronic device is a first angle; at a second time point, the folding angle of the first electronic device changing to a second angle, and based on that the first electronic device establishes the multi-screen coordination connection to the second electronic device, skipping displaying, by the first electronic device, an animation effect of a wallpaper change; disconnecting, by the first electronic device, the multi-screen coordination connection from the second electronic device at a third time point, where the folding angle of the first electronic device is the first angle at the third time point; and at a fourth time point, the folding angle of the first electronic device changing to the second angle, and based on that the first electronic device does not establish a multi-screen coordination connection to another electronic device, displaying, by the first electronic device, the animation effect of the wallpaper change.

## Description

### TECHNICAL FIELD

Embodiments of this application relate to the field of electronic technologies, and in particular, to a wallpaper display method and an electronic device.

### BACKGROUND

In a scenario in which two electronic devices perform multi-screen coordination, a first electronic device needs to record the screen and encode a screen recording video, and then send the screen recording video to a second electronic device performing multi-screen coordination for playback, thereby implementing multi-screen coordination between the two electronic devices. In this case, if a dynamic wallpaper application (application, APP) in the first electronic device plays an animation effect video of a dynamic wallpaper, the first electronic device needs to decode the animation effect video. If the processing capability of a processor in the first electronic device is relatively low, the dynamic wallpaper APP is restarted, causing a flickering black screen and affecting user experience.

### SUMMARY

Embodiments of this application provide a wallpaper display method and an electronic device, which relate to the field of electronic technologies and are used to avoid a flickering black screen caused by a dynamic wallpaper APP playing an animation effect video in a multi-screen coordination scenario.

To achieve the foregoing objective, embodiments of this application use the following technical solutions.

According to a first aspect, a wallpaper display method is provided, applied to a first electronic device, where the first electronic device is a foldable screen device, and the method includes: establishing, by the first electronic device, a multi-screen coordination connection to a second electronic device at a first time point, where a folding angle of the first electronic device is a first angle; at a second time point, the folding angle of the first electronic device changing from the first angle to a second angle, and in a process in which the folding angle of the first electronic device changes from the first angle to the second angle, based on that the first electronic device establishes the multi-screen coordination connection to the second electronic device, skipping displaying, by the first electronic device, an animation effect of a wallpaper change, where the second time point is later than the first time point; disconnecting, by the first electronic device, the multi-screen coordination connection from the second electronic device at a third time point, where the folding angle of the first electronic device is the first angle at the third time point; and at a fourth time point, the folding angle of the first electronic device changing from the first angle to the second angle, and in a process in which the folding angle of the first electronic device changes from the first angle to the second angle, based on that the first electronic device does not establish a multi-screen coordination connection to another electronic device, displaying, by the first electronic device, the animation effect of the wallpaper change, where the fourth time point is later than the third time point.

The animation effect of the wallpaper change may be achieved by using an animation effect video of a dynamic wallpaper, or may be achieved by using a vector change of a still wallpaper. For example, when the electronic device gradually changes from an unfolded state to a folded state, the wallpaper gradually moves to the left, and a point of coordinates (0, 0) of the display gradually changes from coordinates (0, 0) corresponding to the wallpaper to coordinates (B, 0) corresponding to the wallpaper. The left side of the display is a display area of a main screen, and the right side of the display is a display area of a secondary screen. A black screen begins to appear in the display area ofthe secondary screen, and the range of the black screen gradually increases.

In the wallpaper display method provided in this embodiment of this application, in a multi-screen coordination scenario, the first electronic device establishes the multi-screen coordination connection to the second electronic device. When the folding angle of the first electronic device changes, the display of the first electronic device does not display the animation effect of the wallpaper change. The first electronic device disconnects the multi-screen coordination connection from the second electronic device, and when the folding angle of the display of the first electronic device changes, the first electronic device displays the animation effect of the wallpaper change. To be specific, the multi-screen coordination and the playback of the animation effect video of the dynamic wallpaper are mutually exclusive, and the multi-screen coordination has a higher priority, to avoid the flickering black screen caused by the dynamic wallpaper APP playing the animation effect video in the multi-screen coordination scenario.

In a possible implementation, the method further includes: when the first electronic device establishes the multi-screen coordination connection to the second electronic device, sending, by a multi-screen coordination application in the first electronic device, first indication information to a dynamic wallpaper application in the first electronic device, where the first indication information indicates that the multi-screen coordination connection has been established; and setting, by the dynamic wallpaper application, a multi-screen coordination flag bit to be valid based on the first indication information, where when valid, the multi-screen coordination flag bit indicates that the multi-screen coordination connection has been established.

The multi-screen coordination application notifies the dynamic wallpaper that the electronic device establishes the multi-screen coordination connection. The dynamic wallpaper application updates the multi-screen coordination flag bit, to record that the electronic device establishes the multi-screen coordination connection, thereby determining not to display the animation effect of the wallpaper change.

In a possible implementation, sending, by the multi-screen coordination application in the first electronic device, the first indication information to the dynamic wallpaper application in the first electronic device includes: sending, by the multi-screen coordination application, the first indication information to the dynamic wallpaper application by using a broadcast message.

Different applications may transmit information by using a broadcast message. Because the dynamic wallpaper application playing the animation effect video of the dynamic wallpaper and the multi-screen coordination application performing multi-screen coordination are two independent processes, when the multi-screen coordination application establishes the multi-screen coordination connection, the dynamic wallpaper application may be notified in time that the multi-screen coordination connection is established.

In a possible implementation, the method further includes: when the first electronic device disconnects the multi-screen coordination connection from the second electronic device, sending, by the multi-screen coordination application, second indication information to the dynamic wallpaper application, where the second indication information indicates that the multi-screen coordination connection has been disconnected; and setting, by the dynamic wallpaper application, the multi-screen coordination flag bit to be invalid based on the second indication information, where when invalid, the multi-screen coordination flag bit indicates that the multi-screen coordination connection has been disconnected.

The multi-screen coordination application notifies the dynamic wallpaper application that the electronic device disconnects the multi-screen coordination connection, and the dynamic wallpaper application updates the multi-screen coordination flag bit, to record that the electronic device disconnects the multi-screen coordination connection, thereby determining to display the animation effect of the wallpaper change.

In a possible implementation, sending, by the multi-screen coordination application, the second indication information to the dynamic wallpaper application includes: sending, by the multi-screen coordination application, the second indication information to the dynamic wallpaper application by using the broadcast message.

Different applications may transmit information by using a broadcast message. Because the dynamic wallpaper application playing the animation effect video of the dynamic wallpaper and the multi-screen coordination application performing multi-screen coordination are two independent processes, when the multi-screen coordination application disconnects the multi-screen coordination connection, the dynamic wallpaper application may be notified in time that the multi-screen coordination connection is disconnected.

In a possible implementation, based on that the first electronic device establishes the multi-screen coordination connection to the second electronic device, displaying, by the first electronic device, the animation effect of the wallpaper change includes: determining, by the first electronic device, that the multi-screen coordination flag bit is invalid, and when a change amount of the folding angle of the first electronic device is greater than or equal to a threshold, playing, by a display of the first electronic device, an animation effect video of a dynamic wallpaper, where the change amount of the folding angle is equal to an absolute value of a difference between the first angle and the second angle.

When the change amount of the folding angle of the electronic device is excessively small, a change of the animation effect video of the dynamic wallpaper is not obvious, and subsequent calculations are unnecessary, so that power consumption is reduced. Only when the change amount of the folding angle of the electronic device is relatively large, the change of the animation effect video of the dynamic wallpaper is obvious.

In a possible implementation, playing, by the display of the first electronic device, the animation effect video of the dynamic wallpaper includes: calculating, by the dynamic wallpaper application, a timestamp that is of the animation effect video and that corresponds to the second angle based on the second angle and total duration of the animation effect video; sending, by the dynamic wallpaper application, the animation effect video and the timestamp that corresponds to the second angle to a media codec in the first electronic device; decoding, by the media codec, the animation effect video to obtain all image frames, and sending target image frames to a drawing and rendering service, where the target image frames include image frames that are from a played timestamp to the timestamp that corresponds to the second angle and that are in all the image frames; and rendering and drawing, by the drawing and rendering service, the received target image frames, and controlling, by using a display driver in the first electronic device, the display to sequentially display the target image frames in ascending order of timestamps. In this implementation, a specific implementation in which the display of the first electronic device plays the animation effect video of the dynamic wallpaper is disclosed.

In a possible implementation, based on that the first electronic device establishes the multi-screen coordination connection to the second electronic device, skipping displaying, by the first electronic device, the animation effect of the wallpaper change includes: determining, by the first electronic device, that the multi-screen coordination flag bit is valid, and displaying, by the first electronic device, a still image on a display. In other words, regardless of how the folding angle of the first electronic device changes, the wallpaper displayed on the display of the first electronic device is still. For example, the last image frame of the animation effect video is continuously displayed, or, if the display has played to the 10^{th} image frame of the animation effect video, the 10^{th} image frame is continuously displayed.

According to a second aspect, an electronic device is provided, including a display, a processor, and a memory. The memory stores instructions. When the processor executes the instructions, the method according to any one of the first aspect and the implementations of the first aspect is performed, to control the display to display the animation effect video of the dynamic wallpaper.

According to a third aspect, a computer-readable storage medium is provided. The computer-readable storage medium includes instructions, and when the instructions are run on an electronic device, the electronic device is enabled to perform the method according to any one of the first aspect and the possible implementations of the first aspect.

According to a fourth aspect, a computer program product including instructions is provided, where the instructions, when executed on the foregoing electronic device, cause the electronic device to perform the method according to any one of the first aspect and the possible implementations of the first aspect.

According to a fifth aspect, a chip system is provided. The chip system includes a processor, configured to support an electronic device in implementing a function in the first aspect. In a possible design, the apparatus further includes an interface circuit, where the interface circuit may be configured to receive a signal from another apparatus (for example, a memory) or send a signal to another apparatus (for example, a communication interface). The chip system may include a chip, or may include other discrete components.

For technical effects of the second aspect to the fifth aspect, refer to technical effects of any one of the first aspect and the possible implementations of the first aspect. Details are not described here again.

### BRIEF DESCRIPTION OF DRAWINGS

FIG. 1 is a diagram of a multi-screen coordination system according to an embodiment of this application;
FIG. 2 is a diagram of a structure of an electronic device according to an embodiment of this application;
FIG. 3 is a diagram of an electronic device when being a foldable screen mobile phone according to an embodiment of this application;
FIG. 4 is a diagram of another electronic device when being a foldable screen mobile phone according to an embodiment of this application;
FIG. 5 is a diagram of a dynamic wallpaper that changes with a folding angle of a first electronic device according to an embodiment of this application;
FIG. 6 is a schematic diagram of a software architecture for running an electronic device according to an embodiment of this application;
FIG. 7A and FIG. 7B are a schematic flowchart of a wallpaper display method according to an embodiment of this application;
FIG. 8 is a schematic flowchart of another wallpaper display method according to an embodiment of this application;
FIG. 9A, FIG. 9B, FIG. 9C, and FIG. 9D are a schematic flowchart of still another wallpaper display method according to an embodiment of this application;
FIG. 10 is a diagram of establishing a multi-screen coordination connection according to an embodiment of this application;
FIG. 11 is a diagram of disconnecting a multi-screen coordination connection according to an embodiment of this application; and
FIG. 12 is a schematic flowchart of yet another wallpaper display method according to an embodiment of this application.

### DESCRIPTION OF EMBODIMENTS

Some concepts in this application are described first.

In embodiments of this application, the terms "first", "second", and the like are merely used for distinguishing between features of a same type, but cannot be understood as indicating relative importance, a quantity, a sequence, or the like.

In embodiments of this application, the term "for example", or the word such as "example" represents giving an example, an illustration, or a description. Any embodiment or design scheme described as "for example" or "example" in this application should not be explained as being more preferred or having more advantages than another embodiment or design scheme. Exactly, use of the words "for example", "example", and the like is intended to present a related concept in a specific manner.

The terms "coupling" and "connection" in embodiments of this application should be understood in a broad sense. For example, the term may refer to a direct physical connection, or an indirect connection implemented through electronic devices, such as a connection implemented through a resistor, an inductor, a capacitor or another electronic device.

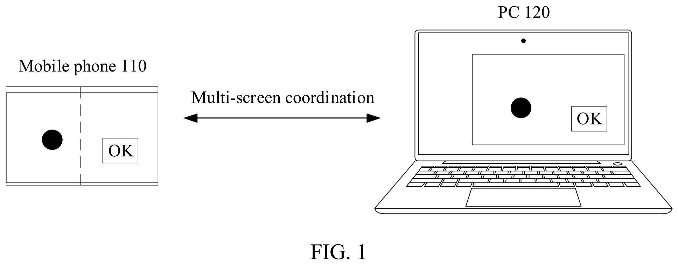

As shown in FIG. 1, an embodiment of this application provides a multi-screen coordination system, including at least two electronic devices, such as a mobile phone 110 and a personal computer (personal computer, PC) 120. The two electronic devices may perform multi-screen coordination in a wired manner (for example, by using a universal serial bus (universal serial buss, USB) interface) or a wireless manner (for example, by using wireless fidelity (wireless fidelity, WiFi) or Bluetooth (bluetooth, BT)). Optionally, a multi-screen coordination connection is established between the two electronic devices. Optionally, the multi-screen coordination connection may include at least one of a USB connection, a WiFi connection, and a Bluetooth connection.

The basic principle of multi-screen coordination between the two electronic devices is as follows: After a first electronic device establishes a multi-screen coordination connection to a second electronic device in a wired or wireless manner, the first electronic device (for example, the mobile phone 110) records the screen and encodes a screen recording video, and then sends the screen recording video to the second electronic device (for example, a PC 120) performing multi-screen coordination for playback. For example, the mobile phone 110 records the screen and encodes the screen recording video, and sends the screen recording video to the PC 120 for playback, and a display interface of the mobile phone 110 may be displayed in the PC 120. In addition, when a user operates the display interface of the first electronic device on the second electronic device, the second electronic device sends a user operation to the first electronic device, and the first electronic device makes response based on the user operation. For example, when the user taps an "OK" button in the mobile phone 110 displayed in the PC 120, the PC 120 sends the user operation to the mobile phone 110, and the mobile phone 110 responds to the user operation. This is equivalent to that the "OK" button in the mobile phone 110 is tapped.

In a scenario in which the two electronic devices perform multi-screen coordination, if a dynamic wallpaper application (application, APP) in the first electronic device plays an animation effect video of a dynamic wallpaper, the first electronic device not only needs to encode the screen recording video, but also needs to decode the animation effect video of the dynamic wallpaper. If the processing capability of a processor in the first electronic device is relatively low, for example, a quantity of allocated macroblocks (macroblock) is less than a quantity of macroblocks required by video encoding and decoding, the dynamic wallpaper APP is restarted, causing a flickering black screen and affecting user experience.

The macroblock is a basic concept in video encoding and decoding technologies. One frame of image in the video is divided into a plurality of macroblocks, so that each macroblock can be encoded and decoded independently, to improve encoding and decoding efficiency. The size of the macroblock is related to an encoding type. For example, the macroblock size corresponding to H264 encoding is 16*16, and the macroblock size corresponding to H265 encoding is 32*32.

According to a wallpaper display method and an electronic device provided in embodiments of this application, in a scenario in which two electronic devices perform multi-screen coordination, a first electronic device is prevented from playing an animation effect video of a dynamic wallpaper, to avoid generation of a flickering black screen. In particular, when the first electronic device is a foldable screen device, the user opens and closes the first electronic device, making a folding angle of the first electronic device change, and the first electronic device does not play the animation effect video of the dynamic wallpaper until a multi-screen coordination connection is disconnected between the two electronic devices.

The electronic device provided in this embodiment of this application may be mobile or fixed. The electronic device may be deployed on land (including an indoor or outdoor, a handheld or vehicle-mounted device), may be deployed on water (for example, on a ship), or may be deployed in air (for example, on an airplane, a balloon, or a satellite). The electronic device may be referred to as user equipment (user equipment, UE), an access terminal, a terminal unit, a subscriber unit (subscriber unit), a terminal station, a mobile station (mobile station, MS), a mobile console, a terminal agent, a terminal apparatus, or the like. For example, the electronic device may be a mobile phone, a tablet computer, a notebook computer, a smart bracelet, a smart screen, a smart watch, a headset, a smart speaker, a virtual reality (virtual reality, VR) device, an augmented reality (augmented reality, AR) device, a terminal in industrial control (industrial control), a terminal in self driving (self driving), a terminal in remote medical (remote medical), a terminal in a smart grid (smart grid), a terminal in transportation safety (transportation safety), a terminal in a smart city (smart city), a terminal in a smart home (smart home), or the like. A specific type and structure of the electronic device are not limited in this embodiment of this application. The following describes a possible structure of the electronic device.

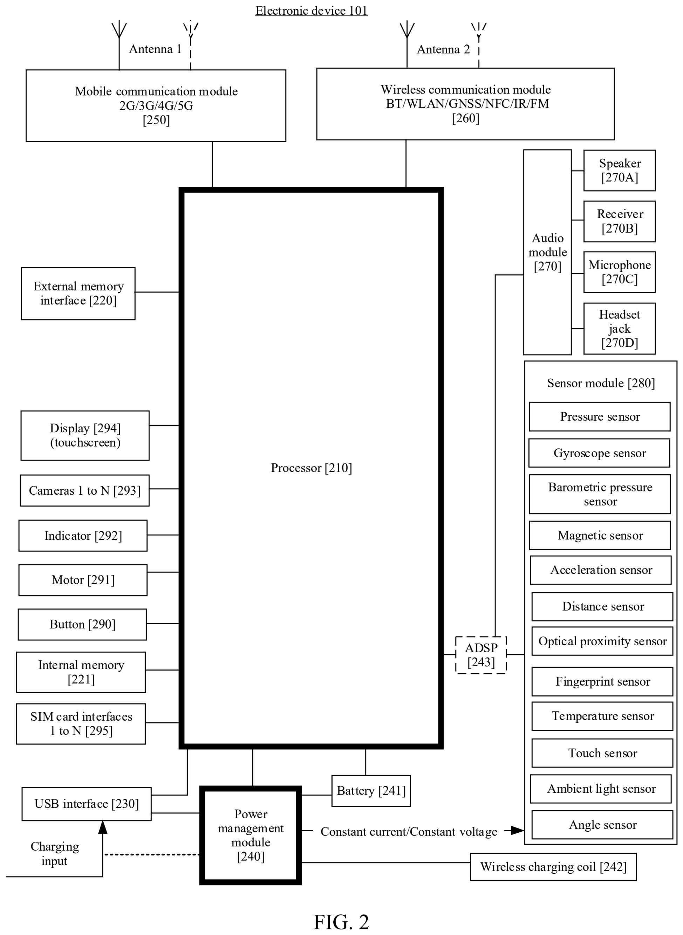

Taking the electronic device being a mobile phone as an example, FIG. 2 illustrates a possible structure of an electronic device 101. The electronic device 101 may include a processor 210, an external memory interface 220, an internal memory 221, a universal serial bus (universal serial bus, USB) interface 230, a power management module 240, a battery 241, a wireless charging coil 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display screen 294, a subscriber identity module (subscriber identification module, SIM) card interface 295, and the like. Optionally, in some implementations, an audio digital signal processor (audio digital signal processor, ADSP) 243 is also included.

It may be understood that the structure shown in this embodiment of this application does not constitute a specific limitation on the electronic device 101. In some other embodiments of this application, the electronic device 101 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may be a field programmable gate array (field programmable gate array, FPGA), an application specific integrated circuit (application specific integrated circuit, ASIC), a system on chip (system on chip, SoC), a central processing unit (central processing unit, CPU), an application processor (application processor, AP), a network processor (network processor, NP), a digital signal processor (digital signal processor, DSP), a micro controller unit (micro controller unit, MCU), a programmable logic device (programmable logic device, PLD), a modulation and demodulation processor, a graphics processing unit (graphics processing unit, GPU), an image signal processor (image signal processor, ISP), a controller, a video codec, a baseband processor, a neural-network processing unit (neural-network processing unit, NPU), or the like. Different processing units may be independent components, or may be integrated into one or more processors. For example, the processor 210 may be an application processor AP. Alternatively, the processor 210 may be integrated in a system on chip (system on chip, SoC). Alternatively, the processor 210 may be integrated in an integrated circuit (integrated circuit, IC) chip. The processor 210 may include an analog front end (analog front end, AFE) and a micro-controller unit (micro-controller unit, MCU) in an IC chip.

The controller may be a nerve center and a command center of the electronic device 101. The controller may generate an operation control signal based on an instruction operation code and a time sequence signal, to complete control of instruction reading and instruction execution.

A memory may be further disposed in the processor 210, and is configured to store computer instructions and data. In some embodiments, the memory in the processor 210 is a cache memory. The memory may store computer instructions or data that has just been used or cyclically used by the processor 210. If the processor 210 needs to use the computer instructions or data again, the processor 210 may directly invoke the computer instructions or data from the memory. This avoids repeated access, and reduces a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface.

The ADSP 243 may be coupled to the audio module 270 and the sensor module 280. The ADSP 243 may be configured to process an audio signal, and may also be configured to data sensor data. When the processor is in a sleep state, the ADSP 243 can still keep working, to reduce power consumption of the electronic device.

It may be understood that an interface connection relationship between modules that is illustrated in this embodiment of this application is merely an example for description, and does not constitute a limitation on a structure of the electronic device 101. In some other embodiments of this application, the electronic device 101 may alternatively use an interface connection manner different from that in the foregoing embodiment, or use a combination of a plurality of interface connection manners.

A wireless communication function of the electronic device 101 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 101 may be configured to cover one or more communication bands. Different antennas may be further reused, to improve antenna utilization. For example, the antenna 1 may be reused as a diversity antenna of a wireless local area network. In some other embodiments, an antenna may be used in combination with a tuning switch.

The mobile communication module 250 may provide a solution applied to the electronic device 101 for wireless communication including 2G/3G/4G/5G and the like. The wireless communication module 260 may provide a solution applied to the electronic device 101 for wireless communication including a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. In some embodiments, in the electronic device 101, the antenna 1 is coupled to the mobile communication module 250, and the antenna 2 is coupled to the wireless communication module 260, so that the electronic device 101 can communicate with a network and another device by using a wireless communication technology.

The external memory interface 220 may be configured to connect to an external storage card, for example, a micro SanDisk (micro SanDisk, Micro SD) card, to extend a storage capability of the electronic device 101. The external storage card communicates with the processor 210 through the external memory interface 220, to implement a data storage function. For example, files such as music and a video are stored in the external storage card.

The internal memory 221 may be configured to store computer-executable program code, and the executable program code includes computer instructions. The processor 210 runs the computer instructions stored in the internal memory 221, to perform various function applications and data processing of the electronic device 101. In addition, the internal memory 221 may include a high-speed random access memory, and may further include a non-volatile memory, for example, at least one disk storage device, a flash memory device, and a universal flash storage (universal flash storage, UFS).

The memory in this embodiment of this application may be a volatile memory or a nonvolatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification is intended to include but is not limited to these and a memory of any other proper type.

The electronic device 101 can implement an audio function such as music playing and recording by using the audio module 270, the speaker 270A, the receiver 270B, the microphone 270C, the headset jack 270D, the application processor, and the like, and the like.

The audio module 270 is configured to convert digital audio information into an analog audio signal for output, and is also configured to convert an analog audio input into a digital audio signal. In some embodiments, the audio module 270 may be disposed in the processor 210, or some functional modules of the audio module 270 are disposed in the processor 210. The speaker 270A, also referred to as a "loudspeaker", is configured to convert an audio electrical signal into a sound signal. The receiver 270B, also referred to as an "earpiece", is configured to convert an electrical audio signal into a sound signal. The microphone 270C, also referred to as a "mike" or a "mic", is configured to convert a sound signal into an electrical signal. At least one microphone 270C may be disposed in the electronic device 101. The headset jack 270D is configured to connect to a wired headset. The headset jack 270D may be a USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 290 includes a power button, a volume button, and the like. The button 290 may be a mechanical button, or may be a touch button. The electronic device 101 may receive a key input, and generate a key signal input related to user settings and function control of the electronic device 101. The motor 291 may generate a vibration prompt. The motor 291 may be configured to provide an incoming call vibration prompt, or may be configured to provide a touch vibration feedback. The indicator 292 may be an indicator light, and may indicate a charging status and a power level change, or may indicate a message, a missed call, a notification, and the like. The SIM card interface 295 is configured to connect to a SIM card. The SIM card may be inserted into the SIM card interface 295 or removed from the SIM card interface 295, to implement contact with or separation from the electronic device 101. The electronic device 101 may support one or N SIM card interfaces, where N is a positive integer greater than 1. The SIM card interface 295 can support a Nano SIM (Nano SIM) card, a Micro SIM (Micro SIM) card, a SIM card, and the like. In some embodiments, the electronic device 101 uses an embedded SIM (embedded SIM, eSIM) card. The eSIM card may be embedded in the electronic device 101 and cannot be separated from the electronic device 101.

The electronic device 101 may implement a shooting function by using the ISP, the camera 293, the video codec, the GPU, the display 294, the application processor, and the like. The ISP is configured to process data fed back by the camera 293. In some embodiments, the ISP may be disposed in the camera 293. The camera 293 is configured to capture a static image or a video. In some embodiments, the electronic device 101 may include one or N cameras 293, where N is a positive integer greater than 1.

The electronic device 101 may implement a display function through the GPU, the display 294, the application processor, and the like. The GPU is an image processing microprocessor and is connected to the display 294 and the application processor. The GPU is configured to perform mathematical and geometric computing for graphics rendering. The processor 210 may include one or more GPUs that execute computer instructions to generate or change display information.

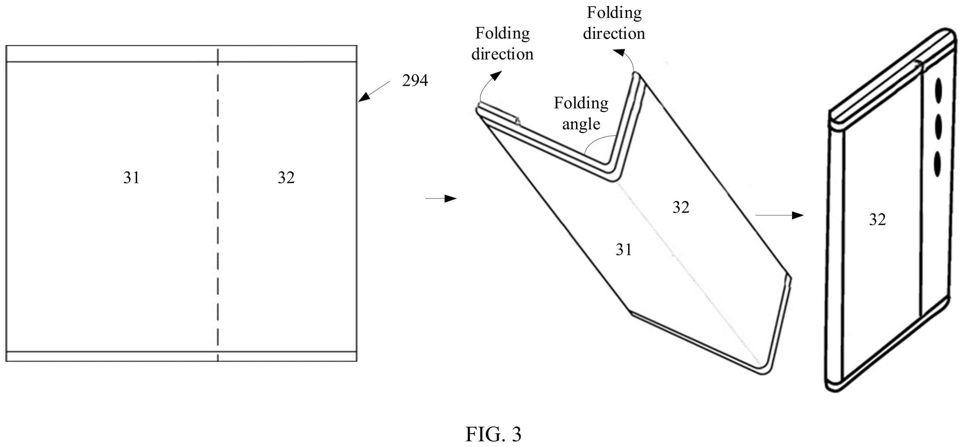

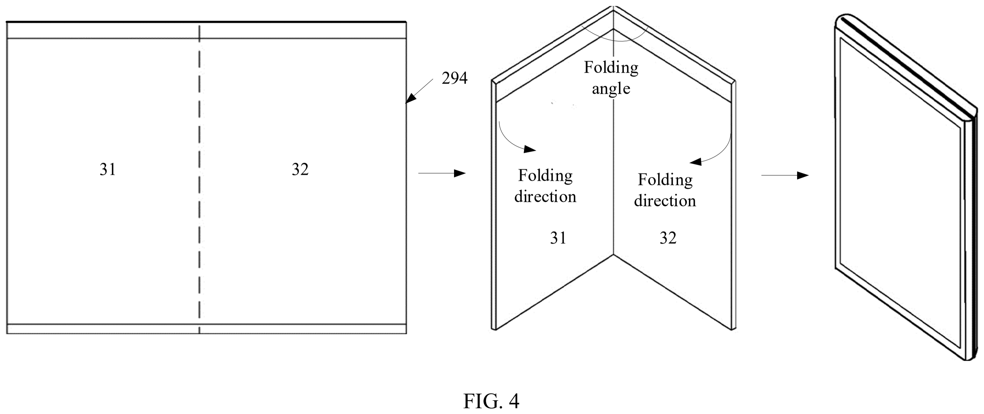

The display 294 is configured to display an image, a video, and the like. The display 294 includes a display panel. In some implementations, the electronic device 101 may include one or more displays 294. In particular, the display 294 may be a foldable screen. For example, as shown in FIG. 3 and FIG. 4, a display panel of the display 294 may include a first display area 31 and a second display area 32. When the display 294 is folded, the first display area 31 and the second display area 32 may be located in different planes. The display 294 in FIG. 3 is folded outward, so that the first display area 31 and the second display area 32 are visible to the user after being folded, and the user can still perform a touch operation on the display 294. The display 294 in FIG. 4 is folded inward, so that the first display area 31 and the second display area 32 are opposite to each other after being fully folded, which is beneficial to protecting the display panel of display 294. The display 294 provided in this embodiment of this application may be a foldable screen folded outward, as shown in FIG. 3, or may be applied to a foldable screen folded inward, as shown in FIG. 4.

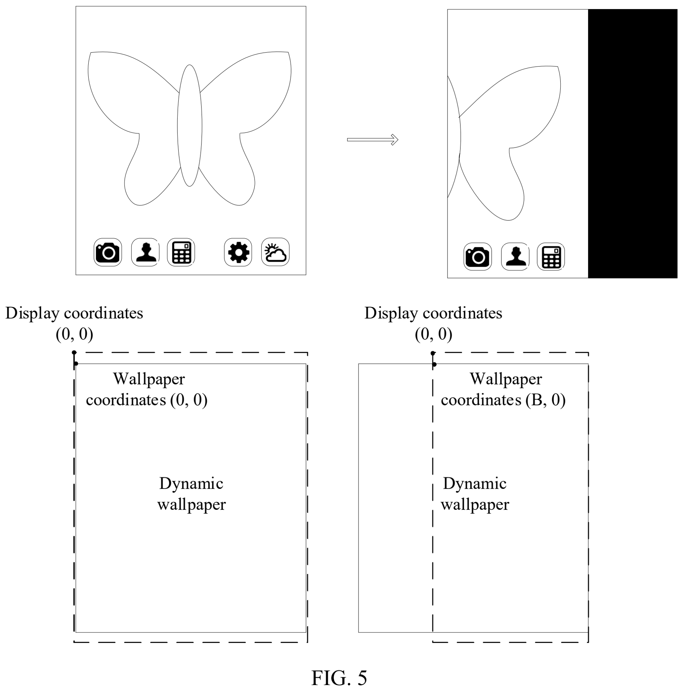

When the electronic device is a foldable screen device, the display 294 may display an animation effect video of a dynamic wallpaper that changes with a folding angle (for example, a position and image content). In this embodiment of this application, the folding angle of the first electronic device is an angle between two display planes of the display of the first electronic device. For example, as shown in FIG. 3 and FIG. 4, the folding angle of the first electronic device is an angle between a plane in which a display area of a main screen (namely, the first display area 31) is located and a plane in which a display area of a secondary screen (namely, the second display area 32) is located. For example, as shown in FIG. 5, when the electronic device gradually changes from an unfolded state to a folded state, the dynamic wallpaper gradually moves to the left, and a point of coordinates (0, 0) of the display gradually changes from coordinates (0, 0) corresponding to the wallpaper to coordinates (B, 0) corresponding to the wallpaper. The left side of the display is a display area ofa main screen, and the right side of the display is a display area of a secondary screen. A black screen begins to appear in the display area ofthe secondary screen, and the range of the black screen gradually increases.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, an angle sensor, and the like. When the display 294 is a foldable screen, the angle sensor may defect the folding angle of the display 294, where a range of the folding angle is 0 to 180 degrees.

The battery 241 may include one or more batteries, to supply power to the load.

The power management module 240 is configured to receive a charging input from a charger. The charger may be a wireless charger, such as a wireless charging base, another electronic device 101 with a reverse wireless charging function, or the like. The power management module 240 may receive a wireless charging input through the wireless charging coil 242 of the electronic device. The charger may alternatively be a wired charger. For example, the power management module 240 may receive a charging input of the wired charger through the USB interface 230. The power management module 240 may also be referred to as a charging chip.

When charging the battery 241, the power management module 240 may further supply power to the electronic device. The power management module 240 receives an input from the battery 241, and supplies power to the processor 210, the internal memory 221, the external memory interface 220, the display 294, the camera 293, the wireless communication module 260, and the like. The power management module 240 may be further configured to monitor parameters such as capacity, a voltage, a battery cycle count, and a battery health status (electric leakage and impedance) of the battery 241. In some other embodiments, the power management module 240 may alternatively be disposed in the processor 210.

The processor 210 performs the wallpaper display method provided in embodiments of this application by executing the program and computer instructions stored in the internal memory 221. A program run by the processor 210 may be based on an operating system, such as an Android^{®} (Android) operating system, an Apple^{®} (iOS) operating system, or a Windows (Windows) operating system.

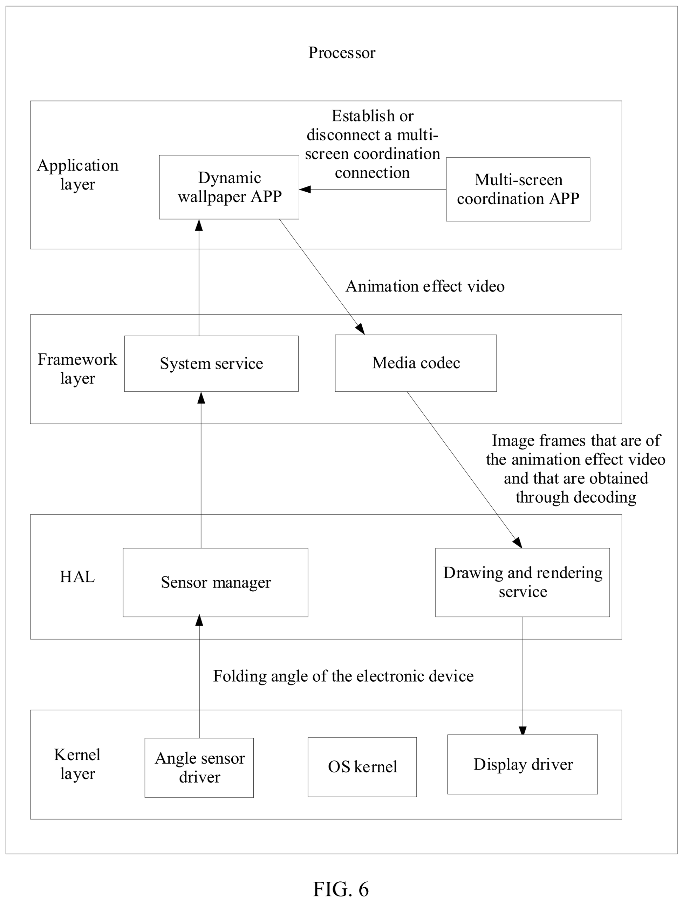

As shown in FIG. 6, using an example in which programs run by the processor 210 are based on the Android operating system^{®}, the programs run by the processor 210 are layered based on functions, and may include a kernel layer, a hardware abstraction layer (hardware abstraction layer, HAL), a framework layer, and an application layer.

The kernel layer includes an operating system (operation system, OS) kernel and hardware drivers for driving hardware resources, such as an angle sensor driver and a display driver. The operating system kernel is configured to manage a process, a memory, a drive program, a file system, a network system, and the like of the system. The angle sensor driver is configured to obtain a folding angle of the electronic device, and the display driver is configured to drive the display to display an image.

The HAL is configured to provide a virtual hardware platform, to abstract hardware, hide hardware interface details, and make code hardware-irrelevant and be portable on a plurality of platforms. For example, the HAL includes a drawing and rendering service (SurfaceFlinger) and a sensor manager (SensorManager). The drawing and rendering service (SurfaceFlinger) is used to periodically draw and render video data and refresh a view tree (a tree data structure formed by a plurality of views) in a graphic user interface (graphic user interface, GUI). The sensor manager (SensorManager) is configured to manage various sensors, and is configured to manage the angle sensor in this application.

The framework layer is configured to provide an application programming interface (application programming interface, API) and a system resource service for applications in the application layer. For example, the framework layer includes a system service (SystemServer) and a media codec (MediaCodec). The system service (SystemServer) is configured to start various services required by the system, such as starting sensor-related services to transmit sensor data. The media codec (MediaCodec) is configured to encode and decode a video.

The application layer may include a multi-screen coordination APP and a dynamic wallpaper APP, where the dynamic wallpaper APP is used to display a dynamic wallpaper with an animation effect video, and the multi-screen coordination APP is used for multi-screen coordination between a plurality of electronic devices. The multi-screen coordination APP is also used to send current establishment or disconnection of a multi-screen coordination connection to the dynamic wallpaper APP by using a broadcast message.

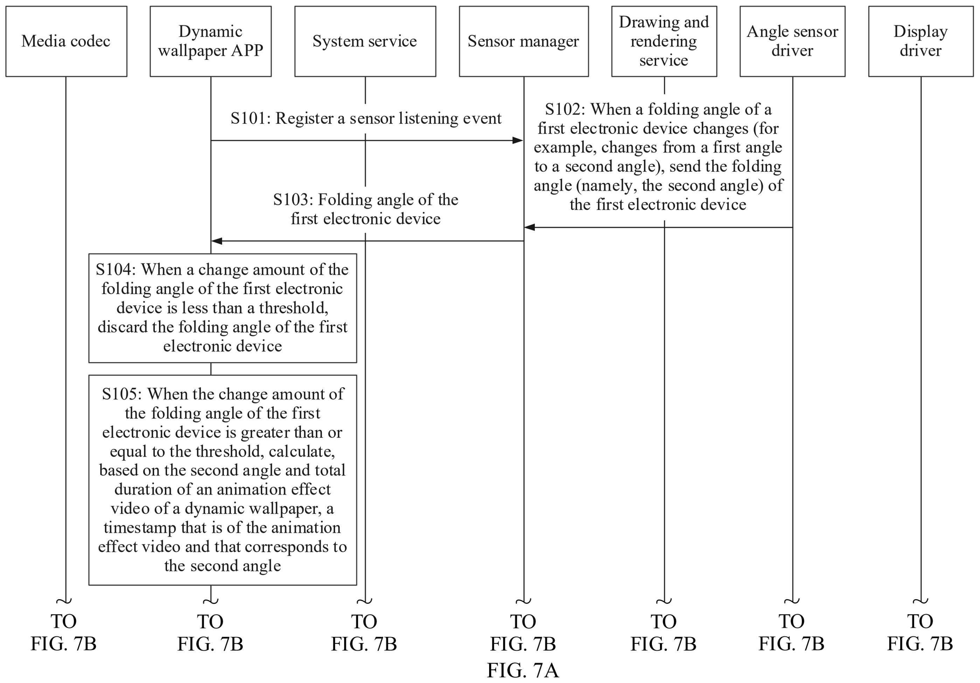

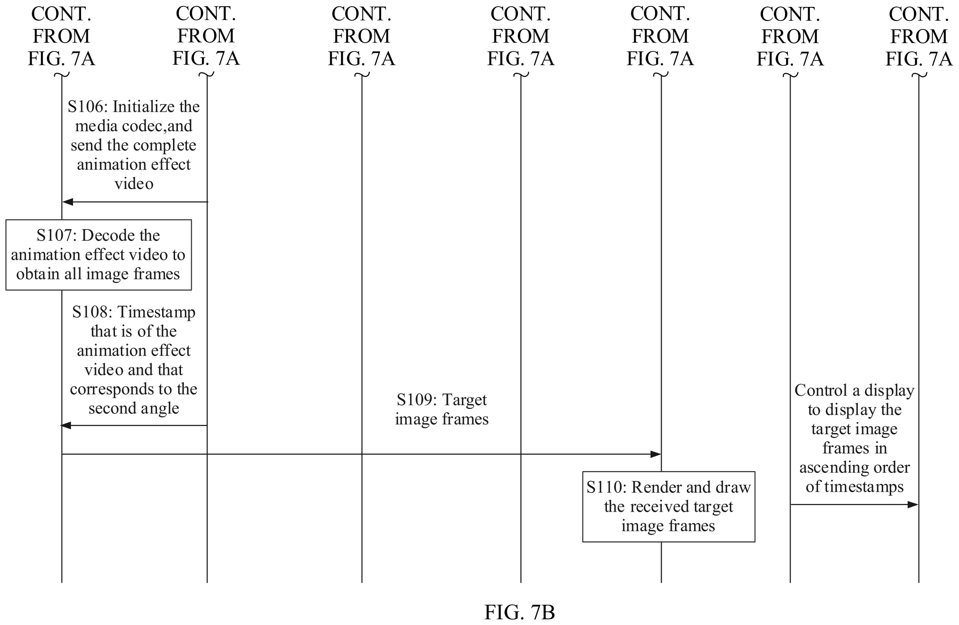

As shown in FIG. 7A and FIG. 7B, an embodiment of this application provides a wallpaper display method. An electronic device may display, as described for FIG. 5, an animation effect video of a dynamic wallpaper based on a folding angle of a first electronic device. The wallpaper display method includes S101 to S110.

S101: A dynamic wallpaper APP registers an angle sensor listening event with a sensor manager (SensorManager) by using a sensor event listener (SensorEventListener).

After the electronic device is started, the dynamic wallpaper APP is started, and the dynamic wallpaper APP registers the angle sensor listening event with the sensor manager (SensorManager) by using the sensor event listener (SensorEventListener).

The sensor event listener (SensorEventListener) may listen to data of various sensors. When registering the angle sensor listening event, the dynamic wallpaper APP may indicate the sensor event listener (SensorEventListener) to register the angle sensor listening event with the sensor manager (SensorManager), to listen to a folding angle that is of a first electronic device and that is detected by an angle sensor.

S102: When the folding angle of the first electronic device changes (for example, changes from a first angle to a second angle), an angle sensor driver sends the folding angle (namely, the second angle) of the first electronic device to the sensor manager (SensorManager).

The angle sensor periodically sends the measured folding angle of the first electronic device to an ADSP. When determining that the folding angle of the first electronic device does not change, the ADSP does not send the folding angle (namely, the second angle) of the first electronic device to the sensor driver, to reduce power consumption. When determining that the angle of a display changes, the ADSP sends the folding angle (namely, the second angle) of the first electronic device to the sensor driver, and further, the angle sensor driver sends the folding angle (namely, the second angle) of the first electronic device to the sensor manager (SensorManager).

For the folding angle of the first electronic device, refer to related descriptions of FIG. 3 and FIG. 4. Details are not described herein again.

S103: The sensor manager (SensorManager) sends the folding angle (namely, the second angle) of the first electronic device to the dynamic wallpaper APP by using a sensor data change (onSensorChanged) function.

The sensor data change (onSensorChanged) function is used to feed back sensor data when the sensor data changes.

S104: When a change amount (an absolute value of a difference between the first angle and the second angle) of the folding angle of the first electronic device is less than a threshold (for example, 2 degrees), the dynamic wallpaper APP discards the folding angle (namely, the second angle) that is of the first electronic device and that is detected this time.

The change amount of the folding angle of the first electronic device is the absolute value of the difference between the folding angle (namely, the second angle) that is of the first electronic device and that is detected this time and the stored folding angle (namely, the first angle) that is of the first electronic device and that is detected last time.

When the change amount of the folding angle of the first electronic device is excessively small, a change of the animation effect video of the dynamic wallpaper is not obvious, and subsequent calculations are unnecessary, namely, subsequent steps S105 to S110 are unnecessary, so that power consumption is reduced.

S105: When the change amount of the folding angle of the first electronic device is greater than or equal to the threshold, the dynamic wallpaper APP calculates, based on the second angle and total duration of the animation effect video of the dynamic wallpaper, a timestamp that is of the animation effect video and that corresponds to the second angle.

Each image frame in the animation effect video corresponds to one timestamp. When the animation effect video is played, the video is played in sequence based on a sequence of the timestamps. In addition, the dynamic wallpaper APP also stores the folding angle (the second angle) of the first electronic device detected this time, so as to recalculate the change amount of the folding angle of the first electronic device next time. To be specific, the second angle detected this time is used as the first angle for recalculating the change amount of the folding angle of the first electronic device next time.

For example, in a possible implementation, the dynamic wallpaper APP may obtain the timestamp that is of the animation effect video and that corresponds to the second angle by calling a callback function-an animation update (onAnimationUpdate) function. Assuming that the total duration of the animation effect video is T, when the folding angle of the first electronic device is Δ degrees (for example, Δ=6), it corresponds to an image frame that is of the animation effect video and whose timestamp is 0; or when the folding angle of the first electronic device is 180-Δ degrees, it corresponds to an image frame that is of the animation effect video and whose timestamp is T. Then, when the folding angle (the second angle) that is of the first electronic device and that is detected this time is α (Δ≤α≤180-Δ), the corresponding timestamp is T*(α-Δ)/(180-2Δ). This implementation can implement: The play progress of the animation effect video changes linearly with the folding angle of the first electronic device.

S106: The dynamic wallpaper APP initializes a media codec (MediaCodec), and sends the animation effect video to the media codec (MediaCodec) by using a data source setting (setDataSource) function.

That the dynamic wallpaper APP initializes the media codec (MediaCodec) includes: creating a media codec (MediaCodec) object, and configuring a video resolution, an encoding manner, and the like for the media codec (MediaCodec) object.

The dynamic wallpaper APP may send the animation effect video to the media codec (MediaCodec) at one time by using the data source setting (setDataSource) function, rather than sending the animation effect video to the media codec (MediaCodec) in segments. To reduce power consumption of the electronic device, if no new folding angle data is obtained within a preset time (for example, 2s) after the dynamic wallpaper APP initializes the media codec (MediaCodec), a memory of the media codec (MediaCodec) is released.

S107: The media codec (MediaCodec) decodes the animation effect video to obtain all image frames.

In a process in which the media codec (MediaCodec) decodes the animation effect video, the media codec (MediaCodec) divides an image frame into a plurality of macroblocks and decodes each macroblock independently. A change between two adjacent image frames in the video is relatively small, and a feature that some areas have a change and other areas have no change is presented. These areas may be formed by splicing macroblocks. Therefore, compression encoding may be performed on macroblocks having no change, and image data of the macroblocks having a change are retained, to reduce the overall size of the video. Decoding is an inverse process of compression encoding.

S108: The dynamic wallpaper APP sends the timestamp that is of the animation effect video and that corresponds to the second angle to the media codec (MediaCodec) by calling a search (seekTo) function of the media codec (MediaCodec).

S109: The media codec (MediaCodec) sends target image frames to a drawing and rendering service (SurfaceFlinger) by using a surface texture (SurfaceTexture).

The target image frames include image frames that are from a played timestamp to the timestamp that corresponds to the second angle and that are in all the image frames obtained through decoding.

The media codec (MediaCodec) does not need to send all image frames that are obtained through decoding and that are of the animation effect video, because some of these image frames have been played, and the video codec only needs to send the image frames from the played timestamp to the timestamp that corresponds to the second angle. The played timestamp is a timestamp corresponding to a played image frame of the animation effect video.

S110: The drawing and rendering service (SurfaceFlinger) renders and draws the received target image frames, and controls, by using a display driver, a display to display the target image frames in ascending order of timestamps, thereby displaying the animation effect video of the dynamic wallpaper.

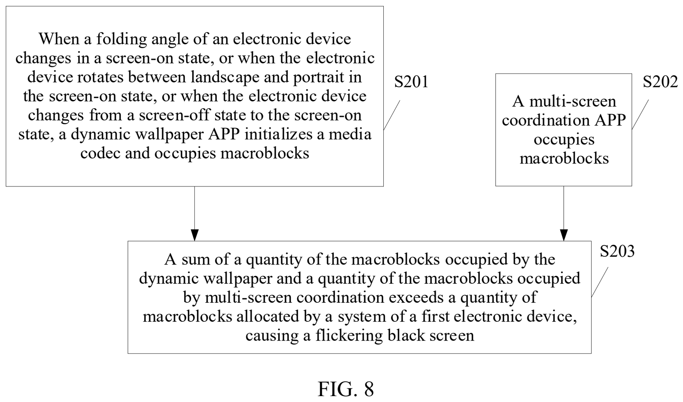

It should be noted that, for S107, a flickering black screen may be caused in the multi-screen coordination scenario. As shown in FIG. 8, in a multi-screen coordination scenario, when the animation effect video is decoded, a process in which insufficient allocation of macroblocks causes a flickering black screen is as follows:

S201: When the folding angle of the electronic device changes in a screen-on state, or when the electronic device rotates between landscape and portrait in the screen-on state, or when the electronic device changes from a screen-off state to the screen-on state, the dynamic wallpaper APP initializes the media codec and occupies macroblocks.

For example, it is assumed that a quantity of macroblocks allocated by the system of the first electronic device system is 1,224,000. The resolution of the dynamic wallpaper is 2016*2016, and the frame rate is 50. In this case, the quantity of macroblocks occupied by the dynamic wallpaper APP when the dynamic wallpaper APP initializes the media codec is 2016*2016*50/256=793800.

S202: A multi-screen coordination APP occupies macroblocks

For example, assuming that the resolution of screen recording during multi-screen coordination is 2346*2016 and the frame rate is 45, the quantity of macroblocks occupied by the multi-screen coordination APP when the multi-screen coordination APP initializes the media codec is 2346*2016*45/256=832,072.5.

S203: A sum of the quantity of macroblocks occupied by the dynamic wallpaper and the quantity of macroblocks occupied by multi-screen coordination exceeds the quantity of macroblocks allocated by the system of the first electronic device, causing a flickering black screen.

Therefore, the total quantity of macroblocks occupied by the dynamic wallpaper APP and the multi-screen coordination APP is 793800+832,072.5=1,625,872.5, which is greater than 1,224,000. To be specific, the quantity of macroblocks actually occupied by video encoding and decoding is much greater than the quantity of macroblocks allocated by the electronic device for video encoding and decoding. Because the priority of multi-screen coordination is higher than that of the dynamic wallpaper, the dynamic wallpaper APP is restarted due to the insufficient quantity of macroblocks, causing a flickering black screen and affecting user experience.

Therefore, embodiments of this application provide a wallpaper display method and an electronic device. In a scenario in which a first electronic device establishes a multi-screen coordination connection to a second electronic device, and the first electronic device is a foldable screen device, when the first electronic device establishes the multi-screen coordination connection to the second electronic device, the multi-screen coordination APP in the first electronic device notifies, in a broadcast form, the dynamic wallpaper APP that the first electronic device establishes the multi-screen coordination connection. When a folding angle of the first electronic device changes (for example, changes from a first angle to a second angle), a display of the first electronic device stops playing an animation effect video of a dynamic wallpaper, that is, statically displays the last image frame played in the animation effect video. When the first electronic device disconnects the multi-screen coordination connection from the second electronic device, the multi-screen coordination APP in the first electronic device notifies, in the broadcast form, the dynamic wallpaper APP that the first electronic device disconnects the multi-screen coordination connection. When the folding angle of the first electronic device changes (for example, changes from the first angle to the second angle), the display of the first electronic device plays the animation effect video of the dynamic wallpaper.

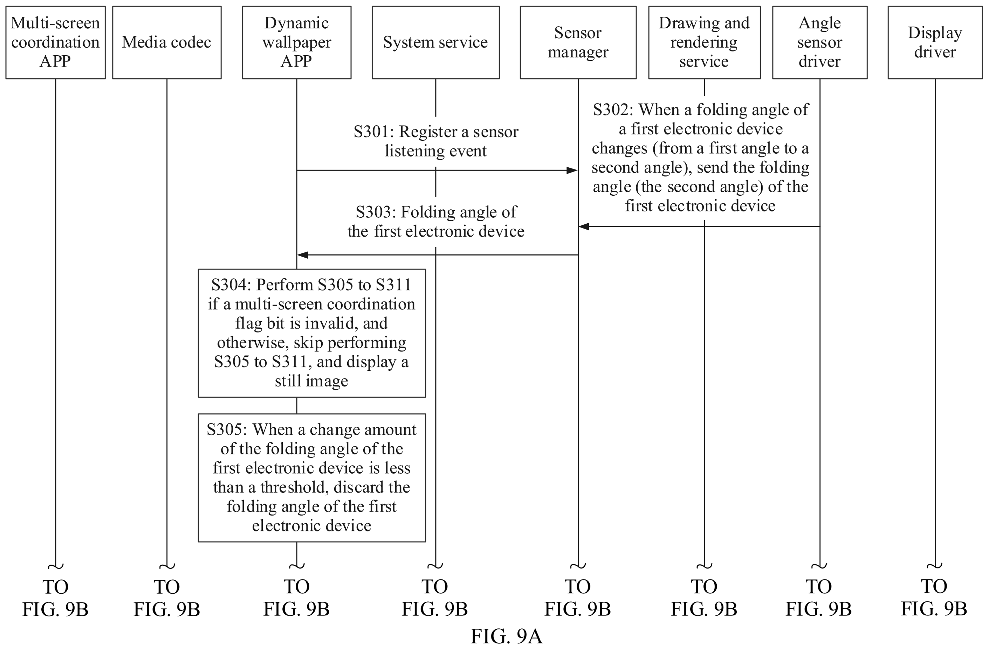

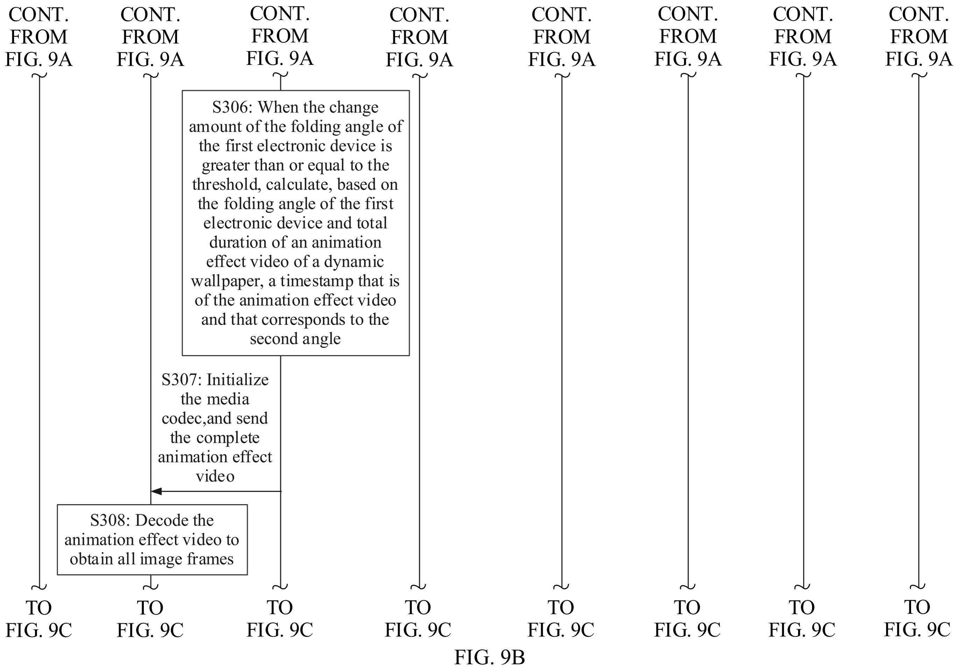

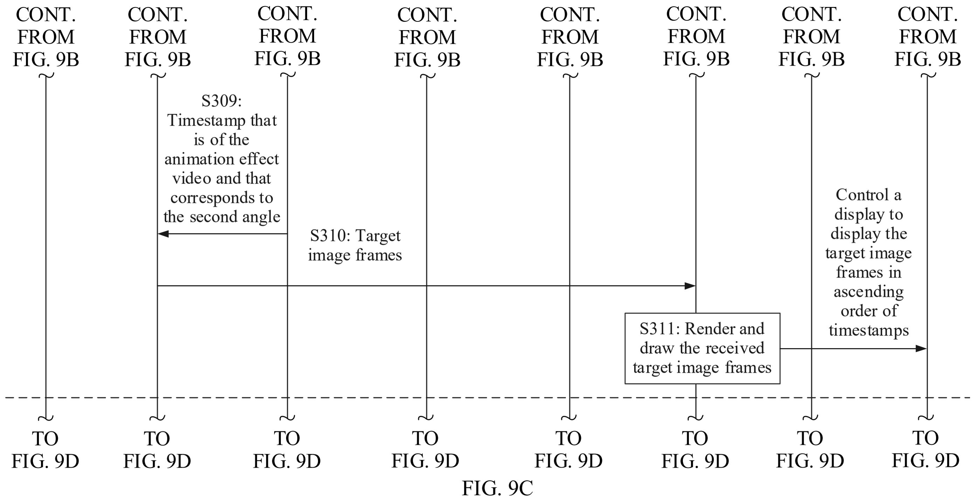

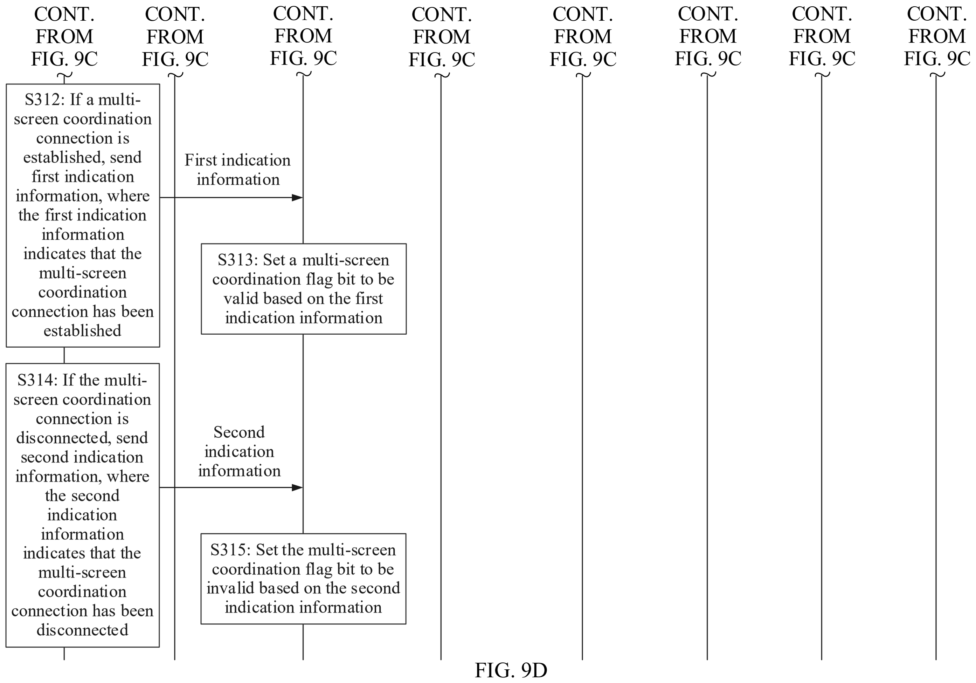

Specifically, the wallpaper display method provided in this embodiment of this application is performed by the first electronic device (such as a mobile phone) that performs multi-screen coordination with the second electronic device (such as a PC). As shown in FIG. 9A, FIG. 9B, FIG. 9C, and FIG. 9D, the method includes S301 to S315. S301 to S311 are a display process of the animation effect video of the dynamic wallpaper, and S312 to S315 are an update process of a multi-screen coordination flag bit. Execution of S301 to S311 is independent of execution of S312 to S315. There is no requirement for a time sequence. For example, S301 to S311 may be first performed, and then S312 to S315 are performed, or S312 to S315 may be first performed, and then S301 to S311 are performed.

S301: A dynamic wallpaper APP registers an angle sensor listening event with a sensor manager (SensorManager) by using a sensor event listener (SensorEventListener).

Refer to step S101 for this step. Details are not described herein again.

S302: When detecting that a folding angle of a first electronic device changes (for example, changes from a first angle to a second angle), an angle sensor sends the folding angle (namely, the second angle) of the first electronic device to a sensor manager (SensorManager) by using an angle sensor driver.

Refer to step S102 for this step. Details are not described herein again.

S303: The sensor manager (SensorManager) sends the folding angle (namely, the second angle) of the first electronic device to the dynamic wallpaper APP by using a sensor data change (onSensorChanged) function.

S304. When a multi-screen coordination flag bit is invalid (that is, the multi-screen coordination flag bit indicates that the multi-screen coordination connection has been disconnected), S305 to S311 are performed. When the multi-screen coordination flag bit is valid (that is, the multi-screen coordination flag bit indicates that the multi-screen coordination connection has been established), S305 to S311 are not performed. To be specific, the first electronic device does not play the animation effect video of the dynamic wallpaper on the display, but displays a still image.

The multi-screen coordination flag bit indicates that the first electronic device establishes or disconnects the multi-screen coordination connection. For example, when the multi-screen coordination flag bit is valid (for example, the multi-screen coordination flag bit is TRUE, indicating validity, for example, IsRecording=TRUE), it indicates that the first electronic device establishes a multi-screen coordination connection, and when the multi-screen coordination flag bit is invalid (for example, the multi-screen coordination flag bit is FALSE, indicating validity, for example, IsRecording=FALSE), it indicates that the first electronic device disconnects the multi-screen coordination connection. In a default case, the multi-screen coordination flag bit is invalid. For update of the multi-screen coordination flag bit, refer to steps S312 to S314.

That the first electronic device displays a still image on the display means that regardless of how the folding angle of the first electronic device changes, the wallpaper displayed on the display of the first electronic device is still. For example, the last image frame of the animation effect video is continuously displayed, or, if the display has played to the 10^{th} image frame of the animation effect video, the 10^{th} image frame is continuously displayed. This prevents the media codec from being initialized and macroblocks from being occupied, avoids a case in which the quantity of macroblocks is insufficient, and avoids a flickering black screen caused by the dynamic wallpaper APP playing the animation effect video in the multi-screen coordination scenario.

S305: When a change amount of the folding angle of the first electronic device is less than a threshold (for example, 2 degrees), the dynamic wallpaper APP discards the folding angle (namely, the second angle) that is of the first electronic device and that is detected this time.

Refer to step S104 for this step. Details are not described herein again.

S306: When the change amount of the folding angle of the first electronic device is greater than or equal to the threshold, the dynamic wallpaper APP calculates, based on the second angle of the display and total duration of the animation effect video of the dynamic wallpaper, a timestamp that is of the animation effect video and that corresponds to the folding angle.

In other words, when the multi-screen coordination flag bit is invalid, and when the change amount of the folding angle of the first electronic device is greater than or equal to the threshold, the display of the first electronic device displays the animation effect video of the dynamic wallpaper.

Refer to step S105 for other content of this step. Details are not described herein again.

S307: The dynamic wallpaper APP initializes a media codec (MediaCodec), and sends the animation effect video to the media codec (MediaCodec) by using a data source setting (setDataSource) function.

Refer to step S106 for this step. Details are not described herein again.

S308: The media codec (MediaCodec) decodes the animation effect video to obtain all image frames.

Refer to step S107 for this step. Details are not described herein again.

S309: The dynamic wallpaper APP sends the timestamp that is of the animation effect video and that corresponds to the second angle to the media codec (MediaCodec) by calling a search (seekTo) function of the media codec (MediaCodec).

S310: The media codec (MediaCodec) sends target image frames to a drawing and rendering service (SurfaceFlinger) by using a surface texture (SurfaceTexture).

Refer to step S109 for this step. Details are not described herein again.

S311: The drawing and rendering service (SurfaceFlinger) renders and draws the received target image frames, and controls, by using a display driver, the display to sequentially display the target image frames in ascending order of timestamps, so as to display the animation effect video of the dynamic wallpaper.

Optionally, when the first electronic device establishes the multi-screen coordination connection to and disconnects the multi-screen coordination connection from the second electronic device, the process of setting the multi-screen coordination flag bit is described as follows:

S312: When the first electronic device establishes the multi-screen coordination connection to the second electronic device, a multi-screen coordination APP in the first electronic device sends first indication information to a dynamic wallpaper APP in the first electronic device, where the first indication information indicates that the multi-screen coordination connection has been established.

When the first electronic device establishes the multi-screen coordination connection to the second electronic device, the multi-screen coordination APP may send the first indication information to the dynamic wallpaper APP in the form of a broadcast message by calling a broadcast sending (sendBroadcast) function.

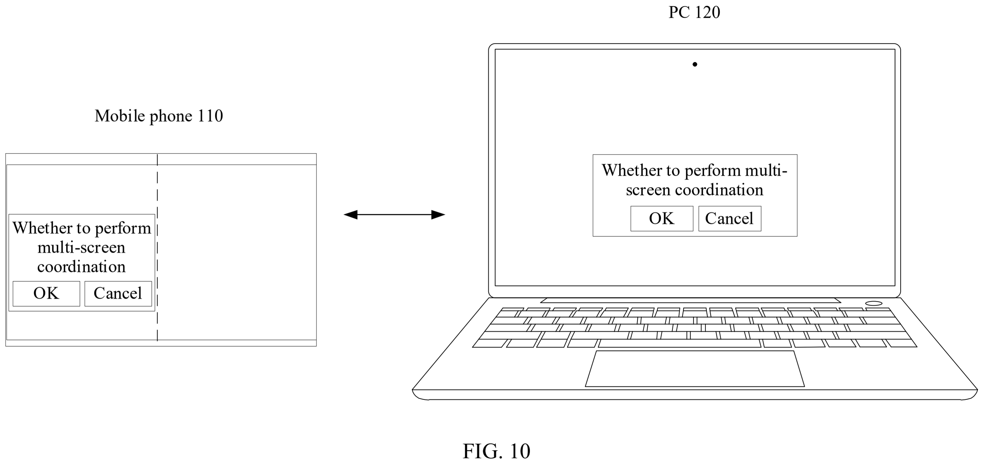

A manner for triggering establishment of the multi-screen coordination connection between the first electronic device and the second electronic device may include: The first electronic device and the second electronic device both turn on Bluetooth or WiFi, and the first electronic device establishes a communication connection to the second electronic device through Bluetooth or WiFi. As shown in FIG. 10, the first electronic device and the second electronic device both pop up a dialog box prompting whether to perform multi-screen coordination. The user taps OK in both dialog boxes of the first electronic device (for example, the mobile phone 110) and the second electronic device (for example, the PC 120), and the first electronic device can establish a multi-screen coordination connection to the second electronic device. Alternatively, the first electronic device is connected to the second electronic device by using a USB cable. As shown in FIG. 10, both the first electronic device and the second electronic device pop up a dialog box prompting whether to perform multi-screen coordination. The user taps a confirmation button in both dialog boxes of the first electronic device and the second electronic device, and the first electronic device can establish a multi-screen coordination connection to the second electronic device.

S313: After receiving the first indication information, the dynamic wallpaper APP sets the multi-screen coordination flag bit to be valid based on the first indication information (to be specific, the multi-screen coordination flag bit indicates that the multi-screen coordination connection has been established).

The dynamic wallpaper APP can receive the broadcast message from the multi-screen coordination APP by using a broadcast receiver (BroadcastReceiver) function.

S314: When the first electronic device disconnects the multi-screen coordination connection from the second electronic device, the multi-screen coordination APP of the first electronic device sends second indication information to the dynamic wallpaper APP of the first electronic device, where the second indication information indicates that the multi-screen coordination connection has been disconnected.

When the first electronic device disconnects the multi-screen coordination connection from the second electronic device, the multi-screen coordination APP may send the second indication information to the dynamic wallpaper APP in the form of a broadcast message by using a broadcast sending (sendBroadcast) function.

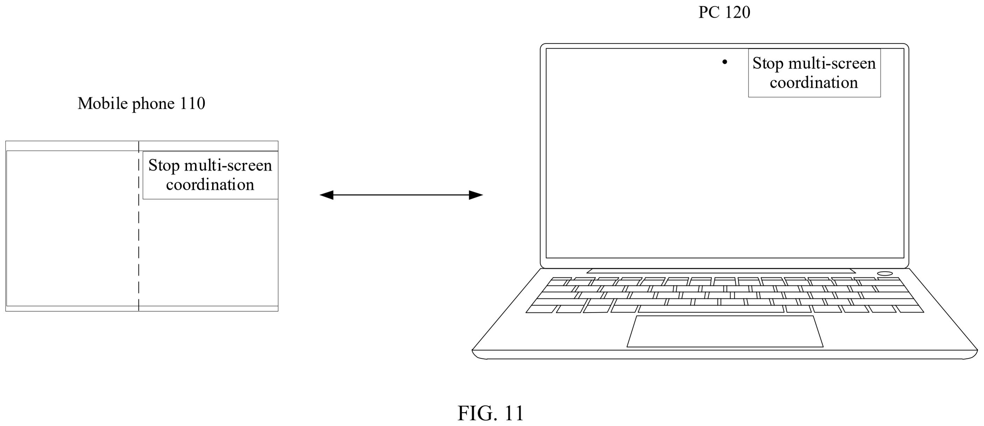

A manner for triggering disconnection of the multi-screen coordination connection between the first electronic device and the second electronic device may include: As shown in FIG. 11, the user taps a coordination stop button in the first electronic device (such as the mobile phone 110) or the second electronic device (such as the PC 120).

S315: After receiving the second indication information, the dynamic wallpaper APP sets the multi-screen coordination flag bit to be invalid based on the second indication information (to be specific, the multi-screen coordination flag bit indicates that the multi-screen coordination connection has been disconnected).

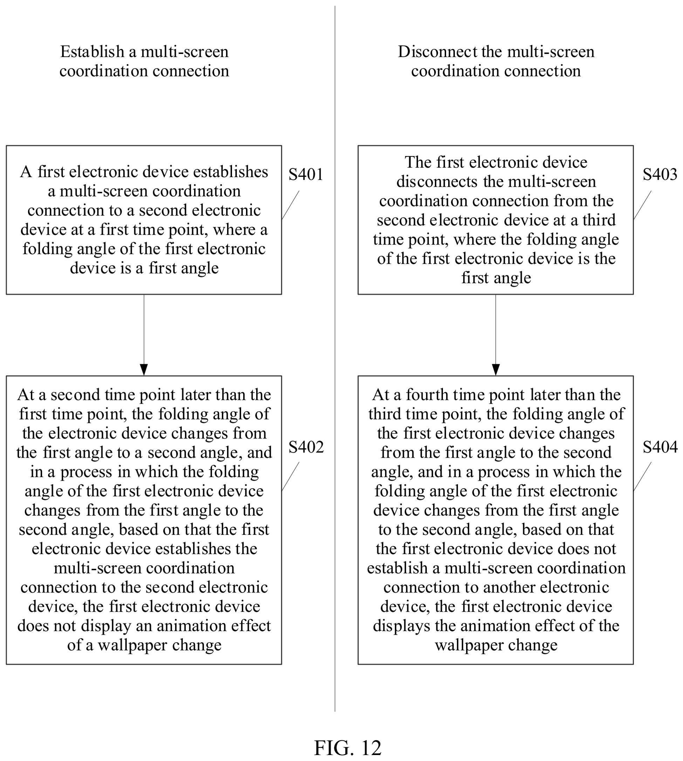

In conclusion, as shown in FIG. 12, an embodiment of this application provides another wallpaper display method, including S401 to S404. Execution of S401 and S402 is independent of execution of S403 and S404. There is no requirement for a time sequence. For example, S401 to S404 may be first performed, and then S403 and S404 are performed, or S403 and S404 may be first performed, and then S401 and S402 are performed.

S401: A first electronic device establishes a multi-screen coordination connection to a second electronic device at a first time point, where a folding angle of the first electronic device is a first angle.

For example, the first angle is 0 degrees. For establishment of a multi-screen coordination connection between the first electronic device and the second electronic device, refer to related descriptions in steps S312 and S313 in FIG. 1 and FIG. 9A, FIG. 9B, FIG. 9C, and FIG. 9D. For how to obtain the folding angle of the first electronic device, refer to related descriptions in steps S301 to S303 in FIG. 9A, FIG. 9B, FIG. 9C, and FIG. 9D. Details are not described herein again.

For the folding angle of the first electronic device, refer to related descriptions of FIG. 3. Details are not described herein again.

S402: At a second time point later than the first time point, the folding angle of the electronic device changes from the first angle to a second angle, and in a process in which the folding angle of the first electronic device changes from the first angle to the second angle, based on that the first electronic device establishes the multi-screen coordination connection to the second electronic device, the first electronic device does not display an animation effect of a wallpaper change.

For example, the second angle is 180 degrees. As described above, the animation effect of the wallpaper change may be achieved by using an animation effect video of a dynamic wallpaper, or may be achieved by using a vector change of a still wallpaper.

For skipping displaying the animation effect of the wallpaper change based on establishment of the multi-screen coordination connection between the first electronic device and the second electronic device, refer to related descriptions of step S304 in FIG. 9A, FIG. 9B, FIG. 9C, and FIG. 9D. Details are not described herein again.

S403: The first electronic device disconnects the multi-screen coordination connection from the second electronic device at a third time point, where the folding angle of the first electronic device is the first angle.

For disconnection of the multi-screen coordination connection between the first electronic device and the second electronic device, refer to related descriptions in steps S314 and S315 in FIG. 9A, FIG. 9B, FIG. 9C, and FIG. 9D. Details are not described herein again.

S404: At a fourth time point later than the third time point, the folding angle of the first electronic device changes from the first angle to the second angle, and in a process in which the folding angle of the first electronic device changes from the first angle to the second angle, based on that the first electronic device does not establish a multi-screen coordination connection to another electronic device, the first electronic device displays the animation effect of the wallpaper change.

For that the first electronic device displays the animation effect of the wallpaper change based on that the first electronic device does not establish the multi-screen coordination connection to another electronic device, refer to related descriptions in steps S304 to S311 in FIG. 9A, FIG. 9B, FIG. 9C, and FIG. 9D. Details are not described herein again.

According to the wallpaper display method and the electronic device provided in embodiments of this application, the first electronic device establishes the multi-screen coordination connection to the second electronic device. When the folding angle of the first electronic device changes, the display of the first electronic device does not display the animation effect of the wallpaper change. The first electronic device disconnects the multi-screen coordination connection from the second electronic device, and when the folding angle of the display of the first electronic device changes, the first electronic device displays the animation effect of the wallpaper change. To be specific, the multi-screen coordination and the playback of the animation effect video of the dynamic wallpaper are mutually exclusive, and the multi-screen coordination has a higher priority, to avoid the flickering black screen caused by the dynamic wallpaper APP playing the animation effect video in the multi-screen coordination scenario.

An embodiment of this application further provides a computer-readable storage medium. The computer-readable storage medium includes instructions. When the instructions are run on the foregoing electronic device, the electronic device is enabled to perform the steps in the foregoing method embodiments, for example, perform the methods shown in FIG. 7A and FIG. 7B to FIG. 9A, FIG. 9B, FIG. 9C, and FIG. 9D, and FIG. 12.

An embodiment of this application further provides a computer program product including instructions. When the instructions are run on the foregoing electronic device, the electronic device is enabled to perform the steps in the foregoing method embodiments, for example, perform the methods shown in FIG. 7A and FIG. 7B to FIG. 9A, FIG. 9B, FIG. 9C, and FIG. 9D, and FIG. 12.

For technical effects of the chip system, the computer-readable storage medium, and the computer program product, refer to the technical effects of the foregoing method embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and modules, refer to corresponding processes in the foregoing method embodiments, and details are not described herein again.

In several embodiments provided in this application, it should be understood that the disclosed system, device, and method may be implemented in another manner. For example, the device embodiments described above are merely examples. For example, division into the modules is merely logic function division and may be other division in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located on one device, or may be distributed on a plurality of devices. Some or all of the modules may be selected based on actual requirements, to achieve the objective of the solution of this embodiment.

In addition, functional modules in embodiments of this application may be integrated into one device, each of the modules may exist alone physically, or two or more modules may be integrated into one device.

All or some of the foregoing embodiments may be implemented through software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wallpaper display method, applied to a first electronic device, wherein the first electronic device is a foldable screen device, and the method comprises:
establishing, by the first electronic device, a multi-screen coordination connection to a second electronic device at a first time point, wherein a folding angle of the first electronic device is a first angle;
at a second time point, the folding angle of the first electronic device changing from the first angle to a second angle, and in a process in which the folding angle of the first electronic device changes from the first angle to the second angle, based on that the first electronic device establishes the multi-screen coordination connection to the second electronic device, skipping displaying, by the first electronic device, an animation effect of a wallpaper change, wherein the second time point is later than the first time point;
disconnecting, by the first electronic device, the multi-screen coordination connection from the second electronic device at a third time point, wherein the folding angle of the first electronic device is the first angle at the third time point; and
at a fourth time point, the folding angle of the first electronic device changing from the first angle to the second angle, and in a process in which the folding angle of the first electronic device changes from the first angle to the second angle, based on that the first electronic device does not establish a multi-screen coordination connection to another electronic device, displaying, by the first electronic device, the animation effect of the wallpaper change, wherein the fourth time point is later than the third time point.

2. The method according to claim 1, further comprising:
when the first electronic device establishes the multi-screen coordination connection to the second electronic device, sending, by a multi-screen coordination application in the first electronic device, first indication information to a dynamic wallpaper application in the first electronic device, wherein the first indication information indicates that the multi-screen coordination connection has been established; and
setting, by the dynamic wallpaper application, a multi-screen coordination flag bit to be valid based on the first indication information, wherein when valid, the multi-screen coordination flag bit indicates that the multi-screen coordination connection has been established.

3. The method according to claim 2, wherein sending, by the multi-screen coordination application in the first electronic device, the first indication information to the dynamic wallpaper application in the first electronic device comprises:
sending, by the multi-screen coordination application, the first indication information to the dynamic wallpaper application by using a broadcast message.

4. The method according to claim 2 or 3, further comprising:
when the first electronic device disconnects the multi-screen coordination connection from the second electronic device, sending, by the multi-screen coordination application, second indication information to the dynamic wallpaper application, wherein the second indication information indicates that the multi-screen coordination connection has been disconnected; and
setting, by the dynamic wallpaper application, the multi-screen coordination flag bit to be invalid based on the second indication information, wherein when invalid, the multi-screen coordination flag bit indicates that the first electronic device disconnects the multi-screen coordination connection.

5. The method according to claim 4, wherein sending, by the multi-screen coordination application, the second indication information to the dynamic wallpaper application comprises:
sending, by the multi-screen coordination application, the second indication information to the dynamic wallpaper application by using the broadcast message.

6. The method according to claim 4 or 5, wherein based on that the first electronic device establishes the multi-screen coordination connection to the second electronic device, displaying, by the first electronic device, the animation effect of the wallpaper change comprises:
determining, by the first electronic device, that the multi-screen coordination flag bit is invalid, and when a change amount of the folding angle of the first electronic device is greater than or equal to a threshold, playing, by a display of the first electronic device, an animation effect video of a dynamic wallpaper, wherein the change amount of the folding angle is equal to an absolute value of a difference between the first angle and the second angle.

7. The method according to claim 6, wherein playing, by the display of the first electronic device, the animation effect video of the dynamic wallpaper comprises:
calculating, by the dynamic wallpaper application, a timestamp that is of the animation effect video and that corresponds to the second angle based on the second angle and total duration of the animation effect video;
sending, by the dynamic wallpaper application, the animation effect video and the timestamp that corresponds to the second angle to a media codec in the first electronic device;
decoding, by the media codec, the animation effect video to obtain all image frames, and sending target image frames to a drawing and rendering service, wherein the target image frames comprise image frames that are from a played timestamp to the timestamp that corresponds to the second angle and that are in all the image frames; and
rendering and drawing, by the drawing and rendering service, the received target image frames, and controlling, by using a display driver in the first electronic device, the display to sequentially display the target image frames in ascending order of timestamps.

8. The method according to claim 2 or 3, wherein based on that the first electronic device establishes the multi-screen coordination connection to the second electronic device, skipping displaying, by the first electronic device, the animation effect of the wallpaper change comprises:
determining, by the first electronic device, that the multi-screen coordination flag bit is valid, and displaying, by the first electronic device, a still image on a display.

9. An electronic device, comprising a display, a processor, and a memory, wherein the memory stores instructions, and when the processor executes the instructions, the method according to any one of claims 1 to 8 is performed, to control the display to display the animation effect video of the dynamic wallpaper.

10. A computer-readable storage medium, comprising instructions, wherein the instructions, when executed on an electronic device, cause the electronic device to perform the method according to any one of claims 1 to 8.
